# EUROPÄISCHE PATENTSCHRIFT

(11) **EP 0 730 715 B1**
(45) Veröffentlichungstag und Bekanntmachung des Hinweises auf die Patenterteilung: **22.04.1998**
(21) Anmeldenummer: 95900758.4
(22) Anmeldetag: 17.11.1994
(51) Int. Cl.: F16K 11/078

(54) **SANITÄRES WASSERVENTIL**
SANITARY WATER VALVE
ROBINET POUR INSTALLATION SANITAIRE

(30) Priorität: 22.11.1993 AT 2363/93
(43) Veröffentlichungstag der Anmeldung: 11.09.1996
(73) Patentinhaber: IDEAL-STANDARD GMBH, 53121 Bonn (DE)
(72) Erfinder: LEO, Walter, D-54516 Wittlich (DE)
(74) Vertreter: Puchberger, Rolf, Dipl. Ing.
(86) Internationale Anmeldenummer: EP9403816
(87) Internationale Veröffentlichungsnummer: WO9514876

(56) Entgegenhaltungen:
- WO-A-94/21948
- GB-A- 2 136 925

## Beschreibung

Die Erfindung betrifft ein sanitäres Wasserventil mit in einem Gehäuse parallel zueinander liegenden Ventilscheiben, deren einander zugekehrte, einander berührende Oberflächen jeweils eine Halbierungsgerade aufweisen, wobei eine der Ventilscheiben drehfest angeordnet ist, je eine beiderseits ihrer Halbierungsgeraden vorgesehene Kalt- und Warmwassereinlaßöffnung enthält und mindestens eine Wasserauslaßöffnung hat, und die andere, gegenüber der drehfest angeordneten Ventilscheibe beweglich vorgesehene Ventilscheibe einen Oberflächenkanal für Umlenkfunktionen aufweist, wobei der Oberflächenkanal durch Verschieben und/oder Verdrehen der beweglichen Ventilscheibe mittels eines Hebels mit der einen, der anderen oder beiden Wassereinlaßöffnungen ganz oder teilweise in Überdeckung oder in eine geschlossene Position bringbar ist. Eine solche Konstruktion wird auch als "geschlossenes System" bezeichnet und zwar deshalb, weil das einströmende Wasser nach unten wieder austritt, d.h. die drehfeste Ventilscheibe wieder durchdringt. Die GB-A 2 136 925 zeigt ein solches Wasserventil mit geschlossenem System.

Die Erfindung betrifft auch ein sanitäres Wasserventil mit in einem Gehäuse parallel zueinander liegenden Ventilscheiben, deren einander zugekehrte, einander berührende Oberflächen jeweils eine Halbierungsgerade aufweisen, wobei eine der Ventilscheiben drehfest angeordnet ist und je eine beiderseits ihrer Halbierungsgeraden vorgesehene Kalt- und Warmwassereinlaßöffnung enthält, und die andere, gegenüber der drehfest angeordneten Ventilscheibe beweglich vorgesehene Ventilscheibe mindestens eine Wasserdurchlaßöffnung aufweist, wobei die Wasserdurchlaßöffnung durch Verschieben und/oder Verdrehen der beweglichen Ventilscheibe mit der einen, der anderen oder beiden Wassereinlaßöffnungen ganz oder teilweise in Überdeckung oder in eine geschlossene Position bringbar ist. Diese Konstruktion wird auch als "offenes System" bezeichnet, weil das einströmende Wasser nicht wieder durch die drehfeste Ventilscheibe nach unten austritt, sondern das Ventil über die bewegliche Scheibe verläßt. Die FR-A 26 020 24 zeigt ein solches Wasserventil mit offenem System.

Wasserventile dieser Arten findet man in handelsüblichen Einhandmischarmaturen, die eine komfortable, rasche Wasserentnahme erlauben. Dabei führt ein Anheben des Hebels zur Steigerung der Wassermenge, ein Verschwenken des Hebels nach links zu einer Erhöhung der Temperatur und ein Verschwenken des Hebels nach rechts zu einem Senken der Temperatur. Befindet sich der Hebel in der Mitte unten, ist das Ventil geschlossen. Ein übliches, volles Anheben des Hebels in der mittleren Position bewirkt die Abgabe von Mischwasser in großer Menge. Auch bei den Wasserventilen der genannten GB-A 2 136 925 und FR-A 26 020 24 ist dies der Fall. Da das Anheben des Hebels in der mittleren Position die einfachste, normalste und damit übliche Bewegung ist, wird von einem Großteil der Benutzer zuerst diese Einstellung gewählt und dann ausgehend davon gegebenenfalls eine Temperaturkorrektur vorgenommen. Ist die Temperatur des Wassers für den Nutzungszweck unerheblich, entnimmt der Benutzer dennoch Mischwasser, was einen unnötigen Energieverbrauch bedeutet. Benötigt der Benutzer Kaltwasser, so fließt bis zur Umstellung dennoch Mischwasser in erheblicher Menge aus, was sowohl Energie- als auch Wasserverschwendung ist. Ebenso verhält es sich bei der Einstellung für Heißwasser. Bis die richtige Temperatur eingestellt ist, geht aufgrund der großen Durchflußmenge, die der mittleren Stellung des Hebels entspricht, sehr viel Wasser verloren.

Aufgabe der vorliegenden Erfindung ist es, die eingangs genannten Wasserventile so zu verbessern, daß die Energieverschwendung und vorzugsweise auch die Wasserverschwendung in der oben beschriebenen Art vermieden wird.

Die Aufgabe wird dadurch gelöst, daß beim vollständigen Öffnen des Ventils durch Verschiebung der beweglichen Ventilscheibe gegenüber der drehfesten Ventilscheibe durch vollständiges Anheben des Hebels in einer mittleren Position, d.h. unter Kolinearität der beiden Halbierungsgeraden, der Oberflächenkanal bzw. die Wasserdurchlaßöffnung von der geschlossenen Position in ausschließliche Überdeckung mit der Kaltwassereinlaßöffnung bringbar ist, wobei die Warmwassereinlaßöffnung vollständig abgedichtet bleibt.

Beim Öffnen des Ventils durch einfaches Anheben des Hebels erhält man also zuerst Kaltwasser und kann dann, falls gewünscht, bewußt eine höhere Temperatur einstellen. Es wird also keine Energie zum Erwärmen von Wasser aufgewandt, es sei denn der Benutzer wünscht dies wirklich und stellt den Hebel bewußt entsprechend ein.

Weiters sind gemäß der Erfindung die Wassereinlaßöffnungen symmetrisch zur Halbierungsgeraden der drehfesten Ventilscheibe angeordnet und der Oberflächenkanal bzw. die Wasserdurchflußöffnung ist bezüglich der Halbierungsgeraden der beweglichen Ventilscheibe asymmetrisch mit größerer Querschnittsfläche auf der Kaltwasserseite ausgeformt. Das asymmetrische Flächenstück auf der Warmwasserseite, d.h. jener Flächenanteil, der keine symmetrische Entsprechung auf der Kaltwasserseite hat, deckt die Warmwassereinlaßöffnung bei angehobener, mittlerer Lage des Hebels vollständig ab. Bis auf den asymmetrischen Abschnitt kann der Oberflächenkanal bzw. die Wasserdurchflußöffnung eine herkömmliche Form haben, so daß wie bei Mischventilen des Standes der Technik ein Verschwenken in die eine Richtung Zunahme des Kaltwasserdurchflusses bei gleichzeitiger Abnahme des Warmwasserdurchfusses und ein Verschwenken in die andere Richtung Zunahme des Warmwasserdurchflusses bei gleichzeitiger Abnahme des Kaltwasserdurchflusses bewirkt und in jeder beliebigen Verschwenkposition ein Anheben des Hebels zu einer größeren Wassermenge bei gleichbleibender Temperatur führt. D.h. im Falle des erfindungsgemäßen Wasserventils, daß selbst bei vollständigem Anheben des Hebels in einer mittleren Position wenig kaltes Wasser austritt und beim Verschwenken in eine Richtung, üblicherweise nach rechts, die Durchflußmenge des Kaltwassers kontinuierlich gesteigert wird. Beim Verschwenken in die andere Richtung, üblicherweise nach links, nimmt die Kaltwassermenge ab und die Warmwassermenge wird von Null ab gesteigert.

Da beim ersten Öffnen - durch einfaches Anheben des Hebels in mittlerer Position - nur relativ wenig Kaltwasser austreten kann, wird sowohl einer Energie- als auch einer Wasserverschwendung entgegengewirkt.

Für das "geschlossene System" ist der Oberflächenkanal im Schnitt vorzugsweise ein Kreis, welcher eine Ausnehmung hat, bzw. in welchen ein Vorsprung der Ventilscheibe ragt, der bei Verschiebung der beweglichen Ventilscheibe durch Anheben des Hebels in einer mittleren Position über der Warmassereinlaßöffnung zuliegen kommt und dieselbe abdichtet. Beim "offenen System" hat die Wasserdurchlaßöffnung vorzugsweise ein halbkreisförmiges Ende, welches eine Ausnehmung hat, bzw. in welches ein Vorsprung der Ventilscheibe ragt, der bei Verschiebung der beweglichen Ventilscheibe durch Anheben des Hebels in einer mittleren Position über der Warmmssereinlaßöffnung zu liegen kommt und dieselbe abdichtet.

Gemäß einer anderen Ausführungsform der Erfindung sind die Wassereinlaßöffnungen asymmetrisch zur Halbierungsgeraden der drehfesten Ventilscheibe angeordnet und der Oberflächenkanal bzw. die Wasserdurchlaßöffnung ist bezüglich der Halbierungsgeraden der beweglichen Ventilscheibe symmetrisch ausgeformt. Dies erzeugt eine andere Durchflußcharakteristik bei der größere Duchflußmengen auf der Kaltwasserseite ermöglicht werden, was für bestimmte Anwendung vorteilhaft sein kann.

Natürlich besteht auch die Möglichkeit sowohl die Wassereinlaßöffnungen als auch den Oberflächenkanal bzw. die Wasserdurchlaßöffnung asymmetrisch zur jeweiligen Halbierungsgeraden zu gestalten. Praktisch gesehen ist es jedoch sicher besser, wenn eine der Scheiben wie bisher gefertigt wird. Im übrigen können die Außenabmessungen des Scheibenpakets so gestaltet werden, daß es in herkömmliche Einhebelmischarmaturen eingesetzt werden kann, wodurch auch bereits bestehende Armaturen damit nachgerüstet werden können.

Nachfolgend wird die Erfindung anhand je eines Ausführungsbeispiels für ein "offenes System" und ein "geschlossenes System", welche in den beiliegenden Zeichnungen dargestellt sind, näher beschrieben.

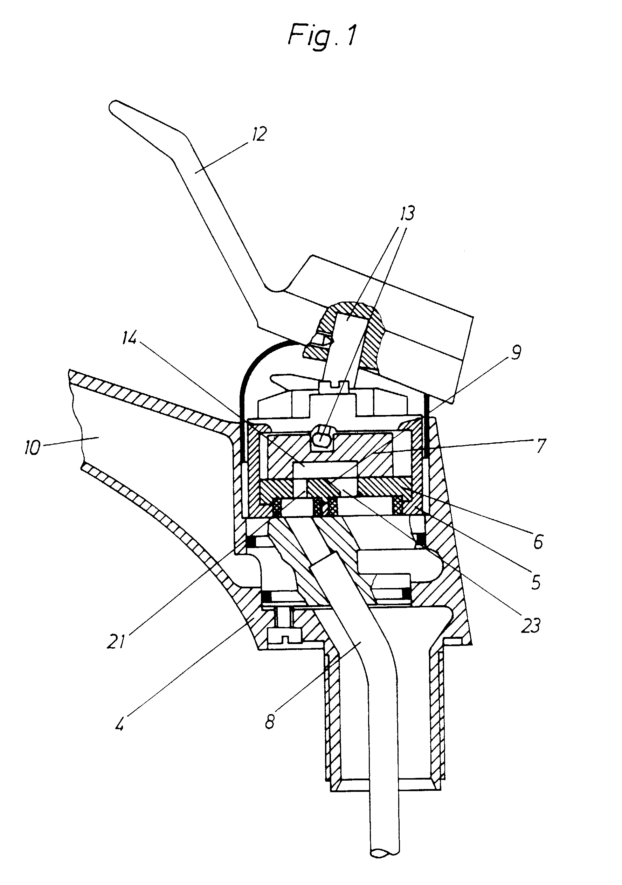

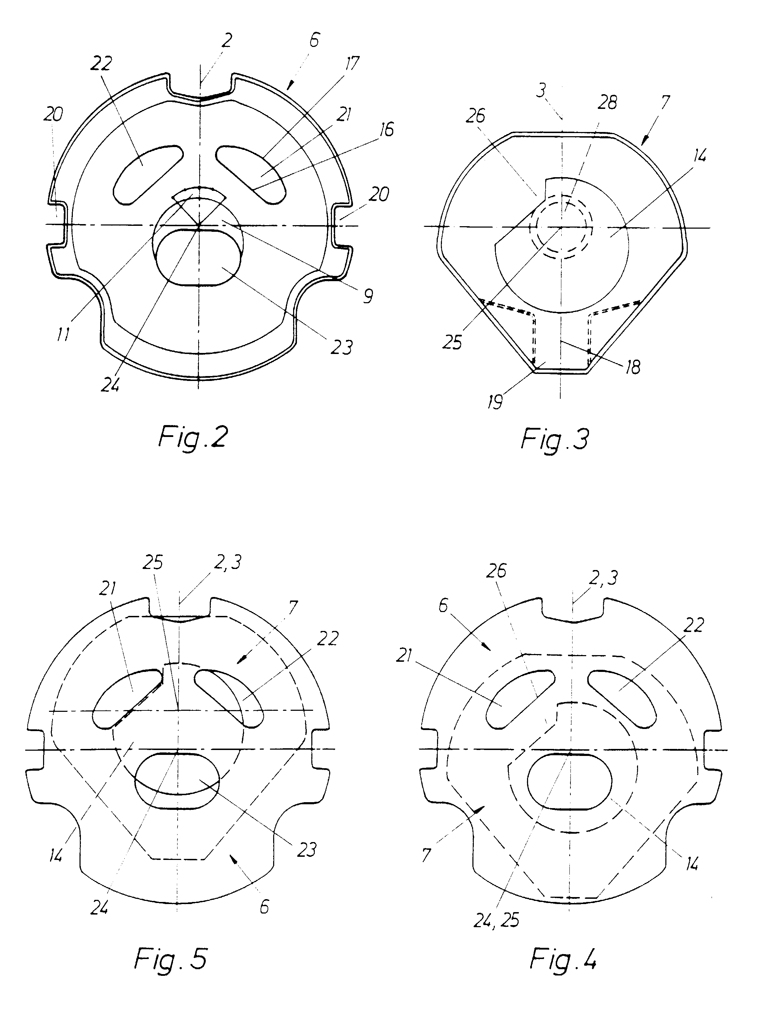

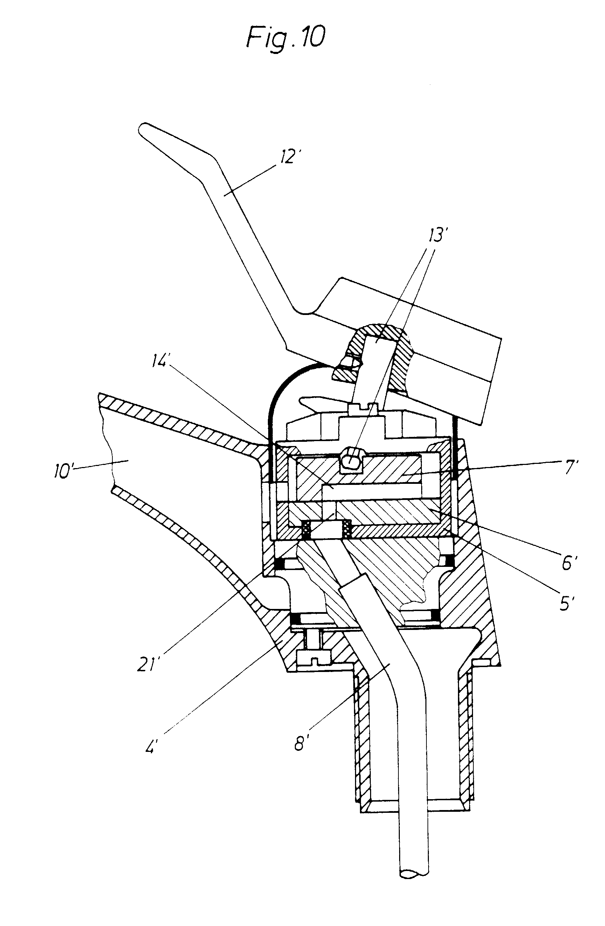

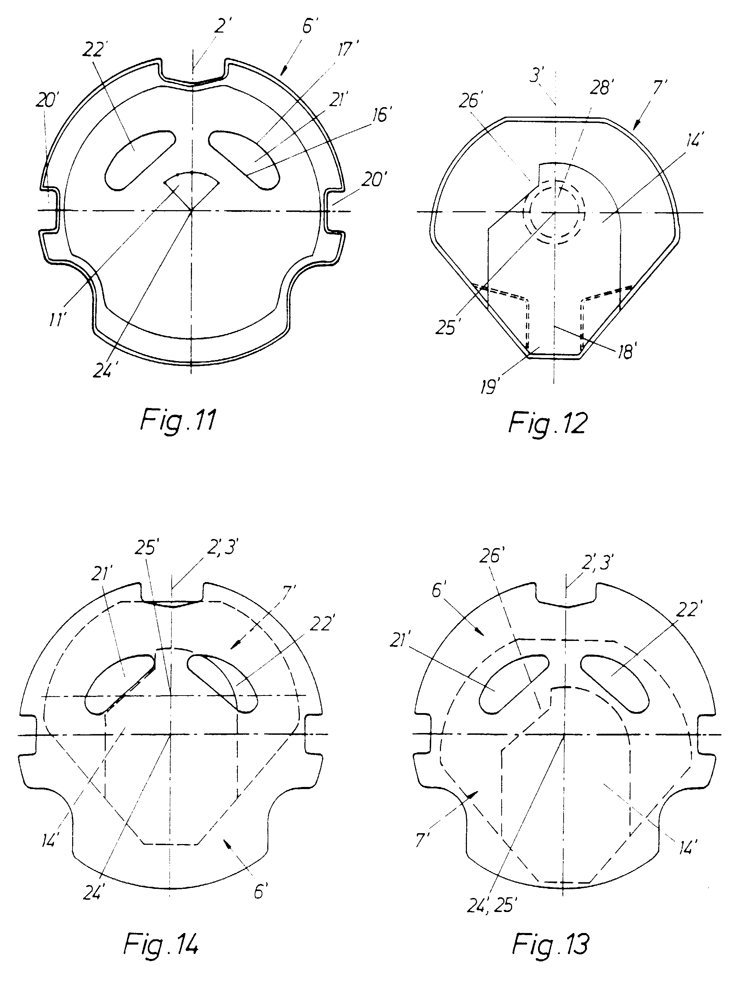

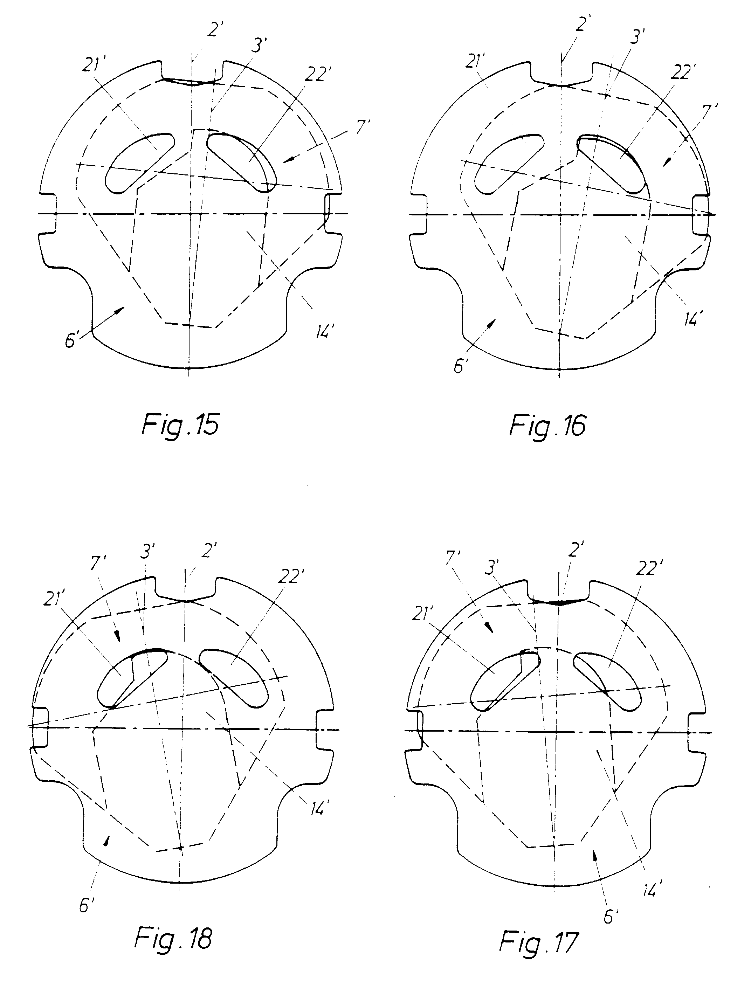

Fig.1 zeigt ein Beispiel für ein "geschlossenes System" bei einer erfindungsgemäßen Einhebelmischarmatur in einem Längschnitt. Fig.2 zeigt die drehfeste Ventilscheibe der in Fig.1 gezeigten Armatur in einer Draufsicht auf die der beweglichen Ventilscheibe zugewandte Oberfläche. Fig.3 zeigt die bewegliche Ventilscheibe der in Fig. 1 gezeigten Armatur in einer Draufsicht auf die der drehfesten Ventilscheibe zugewandte Oberfläche. Die Figuren 4 bis 9 zeigen die aufeinanderliegenden, gemäß den Fig.2 und 3 ausgebildeten Ventilscheiben vereinfacht dargestellt in verschiedenen relativen Lagen zueinander, wobei die Perspektive im montierten Zustand einer Draufsicht von unten entspricht. Fig.10 zeigt ein Beispiel für ein "offenes System" bei einer erfindungsgemäßen Einhebelmischarmatur in einem Längschnitt. Fig.11 zeigt die drehfeste Ventilscheibe der in Fig.10 gezeigten Armatur in einer Draufsicht auf die der beweglichen Ventilscheibe zugewandte Oberfläche. Fig.12 zeigt die bewegliche Ventilscheibe der in Fig. 10 gezeigten Armatur in einer Draufsicht auf die der drehfesten Ventilscheibe zugewandte Oberfläche. Die Figuren 13 bis 18 zeigen die aufeinanderliegenden, gemäß den Fig.11 und 12 ausgebildeten Ventilscheiben vereinfacht dargestellt in verschiedenen relativen Lagen zueinander, wobei die Perspektive im montierten Zustand einer Draufsicht von unten entspricht.

Die Armatur gemäß Fig.1 weist einen Ventilkörper 4 auf, in dem eine Kartusche 5 mit aus zwei Ventilscheiben 6 und 7 gebildeten Steuerelementen angeordnet ist. Die Scheibe 6 (Fig.2) ist feststehend (mit Hilfe von Ausnehmungen 20) und dient als Ventilsitzscheibe. Sie weist eine Warmwassereinlaßöffnung 21 und eine Kaltwassereinlaßöffnung 22, welche an die entsprechenden Zuleitungen 8 angeschlossen sind, sowie eine Wasserauslaßöffnung 23, welche zu einem Auslauf 10 führt, auf. Auf der der beweglichen Ventilscheibe 7 zugewandten Oberfläche der Ventilscheibe 6 ist um einen Teil der Wasserauslaßöffnung 23 ein abgeflachter Bereich 9 vorgesehen. Die Einlaßöffnungen 21, 22 sind länglich gestaltet mit einer gebogenen Begrenzungskante 17 und einer geradlinigen Begrenzungskante 16 und symmetrisch zur Halbierungsgeraden 2 angeordnet. Der in Fig.2 eingezeichnete Kreissektor 11, dessen Spitze sich im Mittelpunkt 24 der Ventilscheibe 6 befindet, umgrenzt den Bereich, in welchem sich der Mittelpunkt 25 der bewegliche Ventilscheibe 7 bewegen kann. Die Ventilscheibe 7 ist auf der Ventilsitzscheibe 6 durch einen mit einem Bedienungshebel 12 in Verbindung stehenden und in eine Ausnehmung 28 eingreifenden Steuerhebel 13 verschieb- und verschwenkbar angeordnet und besitzt einen zur Ventilsitzscheibe 6 hin offenen Oberflächenkanal 14 für Misch- und Unlenkfunktionen, der mit den Einlaßöffnungen 21, 22 und der Auslaßöffnung 23 in unterschiedlichem Maße in Überdeckung bringbar ist. Der Oberflächenkanal 14 ist in bezug auf die Halbierungsgeraden 3 asymmetrisch. Die Grundform des Oberflächenkanals 14 ist im Schnitt ein Kreis, welcher eine Ausnehmung 26 hat, bzw. in den kreisförmigen Kanal ragt ein Vorsprung 26, der an die Ventilscheibe angeformt ist. Die bewegliche Ventilscheibe 7 ist mit einem abgesetzten Fortsatz 18 mit einem verdickten Ende 19 versehen, welches zwischen nicht gezeigten parallelen Rippen der Innenwandung des Gehäuses der Kartusche 5 geführt ist (Fig.3).

Fig.4 zeigt das Ventil in Schließstellung. Der Oberflächenkanal 14 steht mit keiner der Wassereinlaßöffnungen 21, 22 in Überdeckung. Die Mittelpunkte 24, 25 der beiden Ventilscheiben 6, 7 liegen übereinander.

Durch vollständiges Anheben des Hebels 12 in einer mittleren Stellung ergibt sich die in Fig.5 dargestellte relative Lage der Ventilscheiben 6, 7. Die Halbierungsgeraden 2, 3 der beiden Ventilscheiben 6, 7 decken sich, wie in Fig.4, aber der Mittelpunkt 25 der beweglichen Ventilscheibe 7 ist gegenüber jenem der drehfesten Ventilscheibe 6 entlang deren Halbierungsgeraden 2 verschoben und der Oberflächenkanal 14 ist mit der Kaltwassereinlaßöffnung 22 teilweise in Überdeckung. Der Oberflächenkanal 14 erstreckt sich jedoch nicht über die Warmassereinlaßöffnung 21. Bei Verschiebung der beweglichen Ventilscheibe 7 durch Anheben des Hebels 12 in einer mittleren Position kommt der Vorsprung 26 über der Warmwassereinlaßöffnung 21 zu liegen und dichtet diese ab. Es fließt also eine der Überschneidungsfläche von Oberflächenkanal 14 und Kaltwassereinlaßöffnung 22 entsprechende Kaltwassermenge aus der Armatur. Die dargestellte Stellung der Ventilsscheiben 6, 7, ist jene, die am einfachsten eingestellt werden kann und daher, wie in der Einleitung beschrieben gern vom Benutzer als Ausgangsstellung für die nachfolgende Mengen- und Temperaturregelung verwendet wird, ohne das dabei austretende Wasser zu nutzen, bzw. die verwendet wird wenn die Temperatur des Wassers für die Nutzung unerheblich ist. Da durch das erfindungsgemäße Wasserventil in dieser Stellung Kaltwasser in geringer Menge abgegeben wird, kann die Energie- und Wasserverschwendung vermindert werden.

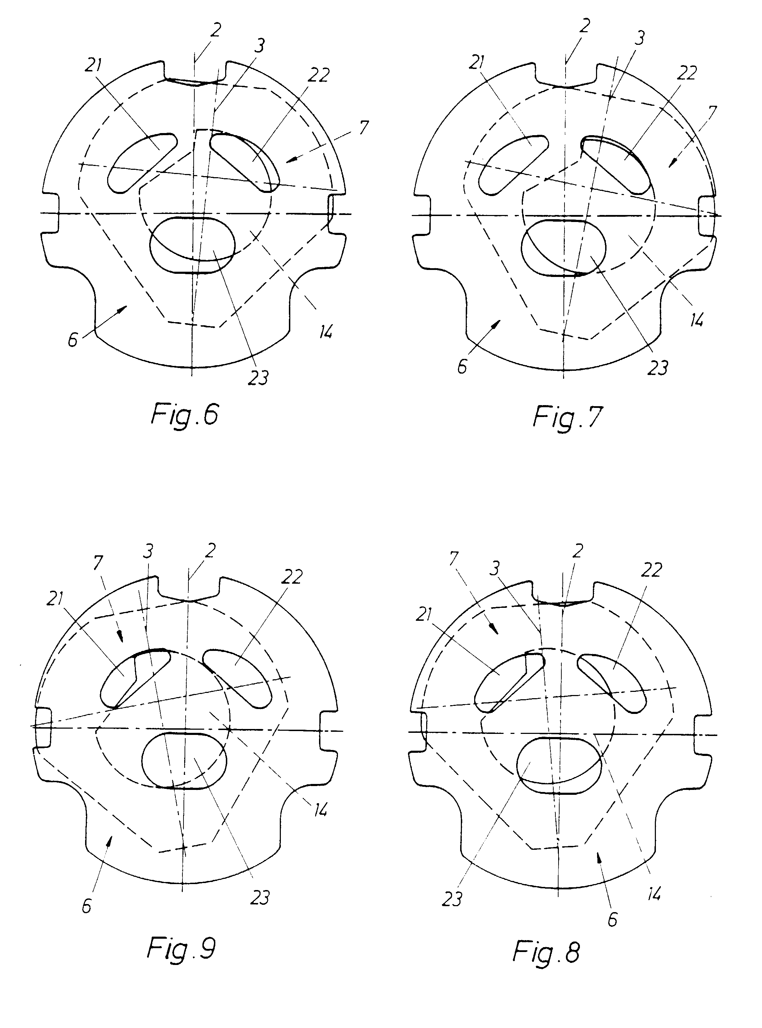

Fig.6 zeigt die relative Lage der Ventilscheiben 6, 7 zueinander, wenn der Hebel 12 ein Stück auf die Kaltwasserseite verschwenkt ist. Die Halbierungsgeraden 2, 3 der beiden Ventilscheiben schließen einen kleinen, spitzen Winkel ein. Der Durchflußquerschnitt für das Kaltwasser, der sich aus der Überschneidung der Kaltwassereinlaßöffnung 22 und dem Oberflächenkanal 14 ergibt, und damit die austretende Kaltwassermenge, ist größer als in der Mittelstellung gemäß Fig.5.

Fig.7 zeigt das vollständige Verschwenken des Hebels 12 auf die Kaltwasserseite. Der von den Halbierungsgeraden 2, 3 eingeschlossene spitze Winkel ist größer als jener in Fig.6. Die Durchflußmenge für Kaltwasser ist in dieser Stellung am größten.

In Fig.8 ist jene Stellung der Ventilscheiben 6, 7 dargestellt, die einem Verschwenken des Hebels 12 um ein Stück auf die Warmwasserseite entspricht. Die Halbierungsgeraden 2, 3 der beiden Ventilscheiben 6, 7 schließen einen kleinen, spitzen Winkel ein, der etwa die gleiche Größe hat wie in Fig. 6, jedoch liegt in diesem Falle die Halbierungsgeraden 3 der beweglichen Ventilscheibe 7 in bezug auf die Halbierungsgeraden 2 auf der anderen Seite. Der Oberflächenkanal 14 überdeckt sowohl einen Teil der Warmwassereinlaßöffnung 21 als auch einen Teil der Kaltwassereinlaßöffnung 22, so daß Mischwasser aus der Armatur austritt.

Fig.9 zeigt schließlich die Lage der beiden Ventilscheiben 6, 7 bei vollständigem Verschwenken des Hebels 12 auf die Warmwasserseite. Der Oberflächenkanal 14 überdeckt einen Teil der Warmwassereinlaßöffnung 21, der flächenmäßig größer ist als in Fig.8. Die Kaltwassereinlaßöffnung 22 steht nicht in Verbindung mit dem Oberflächenkanal 14, so daß nur Warmwasser in einer Menge aus der Armatur tritt, die der Fläche entspricht, die sich aus der Überdeckung von Warmwassereinlaßöffnung 21 und Oberflächenkanal 14 ergibt.

Vergleicht man die Figuren 7 und 9, sieht man, daß in der Stellung für "nur Warmwasser" (Fig.9) aufgrund des Vorsprungs 26 ein wesentlich kleinerer Durchflußquerschnitt freigegeben wird als in der Stellung "nur Kaltwasser" (Fig.7). Dies trägt ebenfalls zum Energiesparen bei.

Die Figuren 10 bis 18 zeigen eine Einhebelmischarmatur mit "offenem System". Kalt- und Warmwasser treten von den Zuleitungen 8' durch die Kalt- und Warmassereinlaßöffnungen 22' und 21' in der drehfesten Ventilscheibe 6' in die Kartusche 5' ein und je nach Stellung der beweglichen Ventilscheibe 7' tritt bei angehobenem Hebel 12' Kalt- und/oder Warmwasser in die Wasserdurchlaßöffnung 14'. Die Wasserdurchlaßöffnung 14' ist in diesem Ausführungsbeispiel ein Kanal mit einem halbkreisförmigen Ende, das im Zentrum der beweglichen Ventilscheibe 7' liegt, und der Kanal mündet seitlich aus der beweglichen Ventilscheibe 7' in die Kartusche 5', von wo das Kalt-, Misch- oder Warmwasser zum Auslauf 10' geführt wird. Ebenso könnte für ein offenes System die Wasserdurchlaßöffnung in bekannter Weise auch ein Durchbruch in der beweglichen Ventilscheibe 7' sein, so daß das Wasser aus der beweglichen Ventilscheibe oben austritt, mit den entsprechenden, bekannten Modifikationen im Aufbau. Das Wasserventil enthält die für solche "offenen Systeme" üblichen Dichtelemente. Die äußere Form der Umfänge der beiden Ventilscheiben 6', 7', die Form der Wassereinlaßöffnungen 21', 22', die Führung der beweglichen Ventilscheibe 7' durch Rippen an der Innenwandung der Kartusche 5' und die Verbindung zwischen dem Bedienungshebel 12' und der beweglichen Ventilscheibe 7' sind in diesem Ausführungsbeispiel analog zur Armatur gemäß den Figuren 1 bis 9.

Die Fig.11 zeigt die drehfeste Ventilscheibe 6' und die Fig.12 die bewegliche Ventilscheibe 7', deren Mittelpunkt 25' sich wiederum innerhalb des Kreissektors 11' auf der drehfesten Ventilscheibe 6' bewegen kann. Die Wasserdurchlaßöffnung bzw. der Kanal 14' hat ein halbkreisförmiges Ende, in welches ein Vorsprung 26' der Ventilscheibe 7' ragt, und erstreckt sich parallel zum Fortsatz 18'. Die Kanten des halbkreisförmigen Endes des Kanals 14' wirken beim Mischund Wasserentnahmevorgang mit den Kanten 16' und 17' der Wassereinlaßöffnurgen 21' und 22' zusammen.

In analoger Weise zeigt die Fig. 13 die Schließstellung des Ventils, die Fig.14 Stellung der Ventilscheiben 6', 7' bei vollständigem Anheben des Hebels 12' in mittlerer Position, Fig.15 ein Verschwenken auf die Kaltwasserseite und Fig.16 ein vollständiges Verschwenken des Hebels 12' auf die Kaltwasserseite. Fig.17 zeigt die Stellung der Ventilscheiben 6',7' bei Verschwenken des Hebels 12' auf die Warmwasserseite zur Entnahme von Mischwasser und Fig. 18 bei vollständigem Verschwenken des Hebels 12' zur Entnahme von Warmwasser.

## Patentansprüche

1. Sanitäres Wasserventil mit in einem Gehäuse (4) parallel zueinander liegenden Ventilscheiben (6, 7), deren einander zugekehrte, einander berührende Oberflächen jeweils eine Halbierungsgerade (2, 3) aufweisen, wobei eine der Ventilscheiben (6) drehfest angeordnet ist, je eine beiderseits ihrer Halbierungsgeraden (2) vorgesehene Kalt- und Warmwassereinlaßöffnung (21, 22) enthält und mindestens eine Wasserauslaßöffnung (23) hat, und die andere, gegenüber der drehfest angeordneten Ventilscheibe (6) beweglich vorgesehene Ventilscheibe (7) einen Oberflächenkanal (14) für Umlenkfunktionen aufweist, wobei der Oberflächenkanal (14) durch Verschieben und/oder Verdrehen der beweglichen Ventilscheibe (7) mittels eines Hebels (12) mit der einen, der anderen oder beiden Wassereinlaßöffnungen (21, 22) ganz oder teilweise in Überdeckung oder in eine geschlossene Position bringbar ist, dadurch gekennzeichnet, daß beim vollständigen Öffnen des Ventils durch Verschiebung der beweglichen Ventilscheibe (7) gegenüber der drehfesten Ventilscheibe (6) durch vollständiges Anheben des Hebels (12) in einer mittleren Position, d.h. unter Kolinearität der beiden Halbierungsgeraden (2, 3), der Oberflächenkanal (14) von der geschlossenen Position in ausschließliche Überdeckung mit der Kaltwassereinlaßöffnung (22) bringbar ist, wobei die Warmwassereinlaßöffnung (21) vollständig abgedichtet bleibt.

2. Sanitäres Wasserventil nach Anspruch 1, dadurch gekennzeichnet, daß die Wassereinlaßöffnungen (21, 22) symmetrisch zur Halbierungsgeraden (2) der drehfesten Ventilscheibe (6) angeordnet sind und der Oberflächenkanal (14) bezüglich der Halbierungsgeraden (3) der beweglichen Ventilscheibe (7) asymmetrisch ausgeformt ist.

3. Sanitäres Wasserventil nach Anspruch 2, dadurch gekennzeichnet, daß der Oberflächenkanal (14) im Schnitt ein Kreis ist, welcher eine Ausnehmung hat, bzw. in welchen ein Vorsprung (26) der Ventilscheibe (7) ragt, der bei Verschiebung der beweglichen Ventilscheibe (7) durch Anheben des Hebels (12) in einer mittleren Position über der Warmwassereinlaßöffnung (21) zuliegen kommt und dieselbe abdichtet.

4. Sanitäres Wasserventil nach Anspruch 1, dadurch gekennzeichnet, daß die Wassereinlaßöffnungen asymmetrisch zur Halbierungsgeraden der drehfesten Ventilscheibe angeordnet sind und der Oberflächenkanal bezüglich der Halbierungsgeraden der beweglichen Ventilscheibe symmetrisch ausgeformt ist.

5. Sanitäres Wasserventil mit in einem Gehäuse (4') parallel zueinander liegenden Ventilscheiben (6', 7'), deren einander zugekehrte, einander berührende Oberflächen jeweils eine Halbierungsgerade (2', 3') aufweisen, wobei eine der Ventilscheiben (6') drehfest angeordnet ist und je eine beiderseits ihrer Halbierungsgeraden (2') vorgesehene Kalt- und Warmwassereinlaßöffnung (21', 22') enthält, und die andere, gegenüber der drehfest angeordneten Ventilscheibe (6') beweglich vorgesehene Ventilscheibe (7') mindestens eine Wasserdurchlaßöffnung (14') aufweist, wobei die Wasserdurchlaßöffnung (14') durch Verschieben und/oder Verdrehen der beweglichen Ventilscheibe (7') mit der einen, der anderen oder beiden Wassereinlaßöffnungen (21', 22') ganz oder teilweise in Überdeckung oder in eine geschlossene Position bringbar ist, dadurch gekennzeichnet, daß beim vollständigen Öffnen des Ventils durch Verschiebung der beweglichen Ventilscheibe (7') gegenüber der drehfesten Ventilscheibe (6') durch vollständiges Anheben des Hebels (12') in einer mittleren Position, d.h. unter Kolinearität der beiden Halbierungsgeraden (2',3'), die Wasserdurchlaßöffnung (14') von der geschlossenen Position in ausschließliche Überdeckung mit der Kaltwassereinlaßöffnung (22') bringbar ist, wobei die Warmwassereinlaßöffnung (21') vollständig abgedichtet bleibt.

6. Sanitäres Wasserventil nach Anspruch 5, dadurch gekennzeichnet, daß die Wassereinlaßöffnungen (21', 22') symmetrisch zur Halbierungsgeraden (2') der drehfesten Ventilscheibe (6') angeordnet sind und die Wasserdurchgangsöffnung (14') bezüglich der Halbierungsgeraden (3') der beweglichen Ventilscheibe (7') asymmetrisch ausgeformt ist.

7. Sanitäres Wasserventil nach Anspruch 5 oder 6, dadurch gekennzeichnet, daß die Wasserdurchlaßöffnung (14') im Schnitt ein halbkreisförmiges Ende hat, welches eine Ausnehmung hat, bzw. in welches ein Vorsprung (26') der Ventilscheibe (7') ragt, der bei Verschiebung der beweglichen Ventilscheibe (7') durch Anheben des Hebels (12') in einer mittleren Position über der Warmwassereinlaßöffnung (21') zuliegen kommt und dieselbe abdichtet.

8. Sanitäres Wasserventil nach Anspruch 5 oder 6, dadurch gekennzeichnet, daß die Wassereinlaßöffnungen asymmetrisch zur Halbierungsgeraden der drehfesten Ventilscheibe angeordnet sind und die Wasserdurchlaßöffnung bezüglich der Halbierungsgeraden der beweglichen Ventilscheibe symmetrisch ausgeformt ist.

## Claims

1. Sanitary water valve having valve discs (6, 7) lying parallel to each other in a housing (4), their facing, contacting surfaces each having a bisecting line (2, 3), one of the valve discs (6) being fixedly arranged, each containing a cold and hot water inlet aperture (21, 22) provided on both sides of their bisecting lines (2), and having at least one water outlet aperture (23), and the other valve disc (7), provided movably with respect to the fixedly arranged valve disc (6), having a surface duct (14) for deflection functions, it being possible, by moving and/or rotating the movable valve disc (7) by means of a lever (12), to bring the surface duct (14) completely or partially to overlap with the one, the other or both water inlet apertures (21, 22), or into a closed position, characterised in that when the valve is completely opened, by moving the movable valve disc (7) with respect to the fixed valve disc (6) by complete lifting of the lever (12) in a central position, i.e. with co-linearity of the two bisecting lines (2, 3), the surface duct (14) can be brought from the closed position into overlap exclusively with the cold water inlet aperture (22), the hot water inlet aperture (21) remaining completely sealed.

2. Sanitary water valve according to claim 1,
characterised in that the water inlet apertures (21, 22) are arranged symmetrically to the bisecting line (2) of the fixed valve disc (6), and the surface duct (14) is asymmetrically formed with respect to the bisecting line (3) of the movable valve disc (7).

3. Sanitary water valve according to claim 2,
characterised in that in section the surface duct (14) is a circle which has a recess, or into which protrudes a projection (26) of the valve disc (7), which, when the movable valve disc (7) is moved by lifting the lever (12) in a central position, comes to lie above the hot water inlet aperture (21) and seals it.

4. Sanitary water valve according to claim 1,
characterised in that the water inlet apertures are arranged asymmetrically to the bisecting line of the fixed valve disc, and the surface duct is formed symmetrically with respect to the bisecting line of the movable valve disc.

5. Sanitary water valve having valve discs (6', 7') lying parallel to each other in a housing (4'), their facing, contacting surfaces each having a bisecting line (2', 3'), one of the valve discs (6') being fixedly arranged, and each containing a cold and hot water inlet aperture (21', 22') provided on both sides of their bisecting lines (2'), and the other valve disc (7'), provided movably with respect to the fixedly arranged valve disc (6'), having at least one water throughflow aperture (14'), it being possible, by moving and/or rotating the movable valve disc (7'), to bring the water throughflow aperture (14') completely or partially to overlap with the one, the other or both water inlet apertures (21', 22'), or into a closed position, characterised in that when the valve is completely opened, by moving the movable valve disc (7') with respect to the fixed valve disc (6') by complete lifting of the lever (12') in a central position, i.e. with co-linearity of the two bisecting lines (2', 3'), the water throughflow aperture (14') can be brought from the closed position into overlap exclusively with the cold water inlet aperture (22'), the hot water inlet aperture (21') remaining completely sealed.

6. Sanitary water valve according to claim 5,
characterised in that the water inlet apertures (21', 22') are arranged symmetrically to the bisecting line (2') of the fixed valve disc (6'), and the water throughflow aperture (14') is formed asymmetrically with respect to the bisecting line (3') of the movable valve disc (7').

7. Sanitary water valve according to claim 5 or 6,
characterised in that in section the water throughflow aperture (14') has a semicircular end which has a recess, or into which protrudes a projection (26') of the valve disc (7'), which, when the movable valve disc (7') is moved by lifting the lever (12') in a central position, comes to lie above the hot water inlet aperture (21'), and seals it.

8. Sanitary water valve according to claim 5 or 6,
characterised in that the water inlet apertures are arranged asymmetrically to the bisecting line of the fixed valve disc, and the water throughflow aperture is symmetrically formed with respect to the bisecting line of the movable valve disc.

## Revendications

1. Robinet sanitaire comportant des disques de robinet (6, 7) placés parallèlement l'un à l'autre dans un boîtier (4), disques dont les surfaces tournées l'une vers l'autre, entrant en contact l'une avec l'autre, présentent chacune une droite bissectrice (2, 3), l'un des disques de robinet (6) étant disposé assujetti en rotation et contenant des ouvertures d'admission d'eau froide et d'eau chaude (21, 22) prévues respectivement de part et d'autre de sa droite bissectrice (2) et ayant au moins une ouverture de sortie d'eau (23), et l'autre disque de robinet (7), prévu de façon à être mobile par rapport au disque de robinet (6) assujetti en rotation, présentant un canal de surface (14) destiné à assurer des fonctions de détournement, le canal de surface (14) étant susceptible d'être placé partiellement ou totalement en coïncidence avec l'une, l'autre ou les deux ouvertures d'entrée d'eau (21, 22), ou bien d'être placé en une position fermée, par un déplacement et/ou une rotation du disque de robinet (7) mobile fait au moyen d'un levier (12), caractérisé en ce que, lors de l'ouverture complète du robinet, par un déplacement du disque de robinet mobile (7) par rapport au disque de robinet assujetti en rotation (6), par un soulèvement complet du levier (12) lorsqu'il est placé dans sa position médiane, c'est-à-dire lorsque les deux droites bissectrices (2, 3) sont colinéaires, le canal de surface (14) est susceptible d'être placé, en partant de la position fermée, en une coïncidence exclusive avec l'ouverture d'entrée d'eau froide (22), l'ouverture d'entrée d'eau chaude (21) restant complètement fermée de façon étanche.

2. Robinet sanitaire selon la revendication 1, caractérisé en ce que les ouvertures d'entrée d'eau (21, 22) sont disposées symétriquement par rapport à la droite bissectrice (2) du disque de robinet assujetti en rotation (6) et le canal de surface (14) étant creusé de façon asymétrique par rapport à la droite bissectrice (3) du disque de robinet mobile (7).

3. Robinet sanitaire selon la revendication 2, caractérisé en ce que le canal de surface (14) a en coupe la forme d'un cercle qui présente un creusement, respectivement dans lequel fait saillie une saillie (26) du disque de robinet (7) qui, lors d'un déplacement du disque de robinet mobile (7) effectué par un soulèvement du levier (12), vient se placer en une position médiane sur l'ouverture d'entrée d'eau chaude (21) et isole celle-ci de façon étanche.

4. Robinet sanitaire selon la revendication 1, caractérisé en ce que les ouvertures d'entrée d'eau sont disposées de façon asymétrique par rapport à la droite bissectrice du disque de robinet assujetti en rotation et le canal de surface est creusé à une forme symétrique par rapport à la droite bissectrice du disque de robinet mobile.

5. Robinet sanitaire avec des disques de robinet (6', 7') placés parallèlement l'un à l'autre dans un boîtier (4'), disques dont les surfaces tournées l'une vers l'autre, entrant en contact l'une avec l'autre, présentent chacune une droite bissectrice (2', 3'), l'un des disques de robinet (6') étant disposé de façon assujettie en rotation et contenant des ouvertures d'entrée d'eau froide et d'eau chaude (21', 22') prévues respectivement de part et d'autre de sa droite bissectrice (2'), et l'autre disque de robinet (7'), prévu de façon à être mobile par rapport au disque de robinet (6') assujetti en rotation, présentant au moins une ouverture de passage d'eau (14'), l'ouverture de passage d'eau (14') étant susceptible d'être placée partiellement ou totalement en coïncidence avec l'une, l'autre ou les deux ouvertures d'entrée d'eau (21', 22'), ou bien d'être placée en position fermée, par un déplacement et/ou une rotation du disque de robinet mobile (7'), caractérisé en ce que, lors de l'ouverture complète du robinet, par un déplacement du disque de robinet mobile (7') par rapport au disque de robinet assujetti en rotation (6'), l'ouverture de passage d'eau (14') est susceptible d'être passée, depuis la position fermée, en coïncidence exclusive avec l'ouverture d'entrée d'eau froide (22') par un soulèvement complet du levier (12') dans une position médiane, c'est-à-dire lorsque les deux droites bissectrices (2', 3') sont colinéaires, l'ouverture d'entrée d'eau chaude (21') restant complètement isolée de façon étanche.

6. Robinet sanitaire selon la revendication 5, caractérisé en ce que les ouvertures d'entrée d'eau (21', 22') sont disposées symétriquement par rapport à la droite bissectrice (2') du disque de robinet assujetti en rotation (6'), et l'ouverture de passage d'eau (14') étant creusée de façon asymétrique par rapport à la droite bissectrice (3') du disque de robinet mobile (7').

7. Robinet sanitaire selon la revendication 5 ou 6, caractérisé en ce que l'ouverture de passage d'eau (14') a en coupe une extrémité en forme de demi-cercle qui présente un creusement, respectivement dans laquelle fait saillie une saillie (26') du disque de robinet (7') qui, lors d'un déplacement du disque de robinet mobile (7') effectué par un soulèvement du levier (12'), vient se placer en une position médiane sur l'ouverture d'entrée d'eau chaude (21') et isole celle-ci de façon étanche.

8. Robinet sanitaire selon la revendication 5 ou 6, caractérisé en ce que les ouvertures d'entrée d'eau sont disposées de façon asymétrique par rapport à la droite bissectrice du disque de robinet assujetti en rotation et l'ouverture de passage d'eau est creusée à une forme symétrique par rapport à la droite bissectrice du disque de robinet mobile.
